## Europäisches Patentamt
## European Patent Office
## Office européen des brevets

(19)

(11) Veröffentlichungsnummer : **0 280 093 B1**

(12)

# EUROPÄISCHE PATENTSCHRIFT

(45) Veröffentlichungstag der Patentschrift :
**17.04.91 Patentblatt 91/16**

(51) Int. Cl.⁵ : **F16H 57/04,** B60K 17/16

(21) Anmeldenummer : **88101666.1**

(22) Anmeldetag : **05.02.88**

(54) **Schmiervorrichtung für das Ausgleichsgetriebe von Kraftfahrzeugen.**

(30) Priorität : **26.02.87 DE 3706217**

(43) Veröffentlichungstag der Anmeldung :
**31.08.88 Patentblatt 88/35**

(45) Bekanntmachung des Hinweises auf die
Patenterteilung :
**17.04.91 Patentblatt 91/16**

(84) Benannte Vertragsstaaten :
**DE FR GB IT NL SE**

(56) Entgegenhaltungen :
**DE-A- 2 033 832
DE-A- 2 150 676
DE-B- 2 734 563
DE-C- 340 807
US-A- 2 046 282
US-A- 2 618 359**

(73) Patentinhaber : **Iveco Magirus
Aktiengesellschaft
Schillerstrasse 2 Postfach 27 40
W-7900 Ulm/Donau (DE)**

(72) Erfinder : **Wörner, Gerhard, Dipl.-Ing.(FH)
Riedlenstrasse 25
W-7900 Ulm-Gögglingen (DE)**

(74) Vertreter : **Socha, Peter
Iveco Magirus AG Postfach 2740
Schillerstrasse 2
W-7900 Ulm (DE)**

## Beschreibung

Die Erfindung betrifft eine Schmiervorrichtung für das Ausgleichsgetriebe von Kraftfahrzeugen mit Achsgehäuse, Ausgleichsgehäuse, Tellerrad und Ölsumpf gemäß Oberbegriff des Anspruchs 1.

Bekanntermaßen wird bei Ausgleichsgetrieben mit Hilfe unterschiedlicher Techniken versucht, der Ausgleichsverzahnung und deren Lagerung während des Fahrbetriebs eine ausreichende Menge Schmieröl zur Verfügung zu stellen. Die dabei angewandten Fördertechniken bedienen sich der Schwerkraft, der Zentrifugalkraft oder aufwendiger Förderschnecken. Die bekannten Ausführungen können bezüglich der Schmierung des Ausgleichsgetriebes während des Fahrbetriebes in zwei Gruppen eingeteilt werden. Die eine Gruppe erreicht den erforderlichen Ölstand im Ausgleichsgetriebe, kann aber keine nachweisbare Durchströmung während des Betriebes erzeugen (DE-C-21 50 676). Die andere Gruppe erreicht zwar – zumeist mit großem Aufwand – einen Schmieröldurchfluß durch das Ausgleichsgetriebe, kann aber innenliegende Lagerstellen mit kleinerem Rotationsdurchmesser nicht ausreichend mit Schmieröl versorgen (DE-A-20 33 832, DE-A-28 39 233, DE-C-30 23 439, AT-B-311 189, US-A-3 182 527). Beide Nachteilkombinationen führen bei einem Ausgleichsgetriebe, das einer hohen Leistungsdichte ausgesetzt ist, zu starker Erwärmung, erhöhtem Verschleiß und frühzeitigem Ausfall.

Aus der US-A-20 46 282 ist eine Schmiervorrichtung bekannt welche dem Oberbegriff des Anspruchs 1 zugrunde liegt. Demnach ist grundsätzlich als bekannt vorauszusetzen eine Schmiervorrichtung für das Ausgleichsgetriebe von Kraftfahrzeugen mit einem in einem Achsgehäuse umlaufenden, geschlossenen, das Tellerrad tragenden und in den Ölsumpf eintauchenden Ausgleichsgehäuse, welches von den mit den Achskegelrädern verbundenen Antriebshalbwellen durchsetzt ist, wobei ein ringförmiger, radial innerer achsialer Endbereich des Ausgleichsgehäuses als (erster) Schmieröl-Förderkegel ausgebildet ist, der in Richtung des ringförmigen, radial inneren anderen achsialen Endbereichs des Ausgleichsgehäuses sich erweitert.

Bei der bekannten Schmiervorrichtung ist jedoch der SchmierölFörderkegel derart angeordnet, daß ein Großteil des Schmieröls radial außen an den Kegelrädern vorbeiströmt ohne sie zu schmieren, d. h. auch bei dieser bekannten Schmiervorrichtung findet keine Schmiermitteldurchströmung durch das Ausgleichsgetriebe statt. Somit reicht der Schmiereffekt dieser Schmiervorrichtung überhaupt nicht aus, um ein Ausgleichsgetriebe hoher Leistungsdichte ausreichend zu schmieren und zu kühlen.

Aufgabe der Erfindung ist die Schaffung einer Schmiervorrichtung für ein Ausgleichsgetriebe der eingangs genannten Art, bei der die vorgenannte Nachteile grundsätzlich beseitigt sind und insbesondere mit Hilfe einfacher Mittel das Ausgleichsgetriebe einer hohen Leistungsdichte ausgesetzt werden kann, ohne daß sich das Schmieröl zu stark erwärmt.

Diese Aufgabe wird bei einer Schmiervorrichtung gemäß dem Oberbegriff des Anspruchs 1 erfindungsgemäß nach dessen Kennzeichenmerkmalen dadurch gelöst, daß der Schmieröl-Förderkegel auf einem mit Bezug auf sämtliche vollständigen Schmierbereiche des Ausgleichsgetriebes radial inneren Rotationsniveau angeordnet ist.

Vorteilhaft weitergebildet wird der Erfindungsgegenstand durch die Merkmale der Unteransprüche 2 bis 8.

Wesen der Erfindung ist mithin die Ausbildung zumindest eines eingangsseitigen Förderkegels für das Schmieröl ins Innere des Ausgleichsgehäuses, durch den das Schmieröl zwangsweise ins Gehäuse gepreßt wird, zumal der Schmieröl-Förderkegel erfindungsgemäß auf einem mit Bezug auf sämtliche vollständigen Schmierbereiche des Ausgleichsgetriebes radial inneren Rotationsniveau angeordnet ist. Der eingangsseitige Überdruck hilft dem Schmierölstrom, die vorhandenen Strömungswiderstände zu überwinden. Für eine effektive Einpressung des Schmieröls im ringförmigen Eingangsbereich des Ausgleichsgehäuses ist es wichtig, daß dort Konizität ausgebildet ist, wobei allenfalls zylindrische Förderbereiche des Schmieröls vor- oder zwischengeordnet sind, keinesfalls jedoch Verjüngungsbereiche, die nur zusätzlichen Strömungswiderstand aufbauen würden.

Zusätzlich zum eingangsseitigen Schmieröl-Förderkegel kann in vorteilhafter Weiterbildung der Erfindung für eine weitere Durchflußbeschleunigung des Schmierölvolumenstroms ein zweiter Schmieröl-Förderkegel im Ausgangsringraum vorgesehen sein, der sich im Vergleich zum Eingangsförderkegel auf einem, vorzugsweise 1 bis 20%, größeren Durchmesserniveau befindet. Dabei ist auch der zweite Schmieröl-Förderkegel im Sinne der Erfindung auf einem mit Bezug auf sämtliche vollständigen Schmierbereiche des Ausgleichsgetriebes radial inneren Rotationsniveau angeordnet.

Für einen effektiven Schmieröleinzug ist es ferner von Vorteil, wenn in unmittelbarer Nachbarschaft des ersten Schmieröl-Förderkegels ein achsgehäusefester Öleinflußtrichter stationär im Gehäuse angeordnet ist, welcher an vertikal tiefer Stelle in den ersten Schmieröl-Förderkegel axial einmündet. Durch letzteres Teilmerkmal ergibt sich infolge der länger auf das Öl im Öleinflußtrichter wirkenden Schwerkraft bereits eine optimal hohe öl-Einlaufgeschwindigkeit in den Schmieröl- Förderkegel.

Durch die Erfindung wird mithin eine eindeutige, besonders effektive Durchströmung des Ausgleichsgetriebes mit Schmiermittel während des Betriebszustandes erzielt, und zwar mit sehr einfachen Mitteln, die einfach gefertigt werden können (statt Zylindern werden jeweils Konusse gedreht) und für einen sehr kompakten Aufbau sorgen (keine Ölpumpe, Förderschnecke oder dergl. wie nach dem Stand der Technik). Aufgrund der Kompaktausbildung kann in vielen Fällen ein bekanntes Ausgleichsgetriebe auf einfache Weise erfindungsgemäß nachgerüstet werden.

Die erfindungsgemäße Zwangsförderung des Schmieröls besorgt einen sehr guten Wärmeabtransport, eine effektive Schmierung, und das Ausgleichsgetriebe kann hochbelastet in zuverlässiger Weise betrieben werden, ohne daß ein erhöhter Verschleiß zu einem frühzeitigen Ausfall führt. Entsprechend ergibt sich eine höhere Lebensdauer. Besonderer Vorteil ist, daß das Schmieröl auf optimal niedrigem Durchmesserniveau durch das Ausgleichsgetriebe gepreßt wird. Dadurch werden auch Schmierstellen, die auf geringem Rotationsdurchmesser liegen (z. B. Ausgleichskegelradlager, Axiallager der Achskegelräder), ständig mit frischem Schmieröl versorgt.

Aus der DE-C 27 34 563 ist es zwar ebenfalls grundsätzlich bekannt, mit Hilfe einer konischen Erweiterung, Schmieröl zwangsweise zu fördern. Bei dieser bekannten Vorrichtung handelt es sich jedoch nicht um eine Schmiervorrichtung für ein Ausgleichsgetriebe, sondern für ein Planetengetriebe in einem Kettenradantrieb. Im übrigen unterscheidet sich die bekannte Anordnung in ihrem konstruktiven Aufbau und ihrer Wirkungsweise im einzelnen wesentlich von der vorliegenden Erfindung. Insbesondere findet bei der bekannten Anordnung infolge einer Strömungskanal-Verjüngung sogar eine Durchflußhemmung des Schmieröls statt, die kompensiert werden muß.

Die Erfindung wird nachfolgend anhand eines Ausführungsbeispiels unter Bezugnahme auf die beigefügte Zeichnung näher erläutert ; es zeigen :

Fig. 1 ein Ausgleichsgetriebe in einem schematischen horizontalen Axialschnitt, und

Fig. 2 eine der Fig. 1 entsprechende Prinzipskizze der Erfindung.

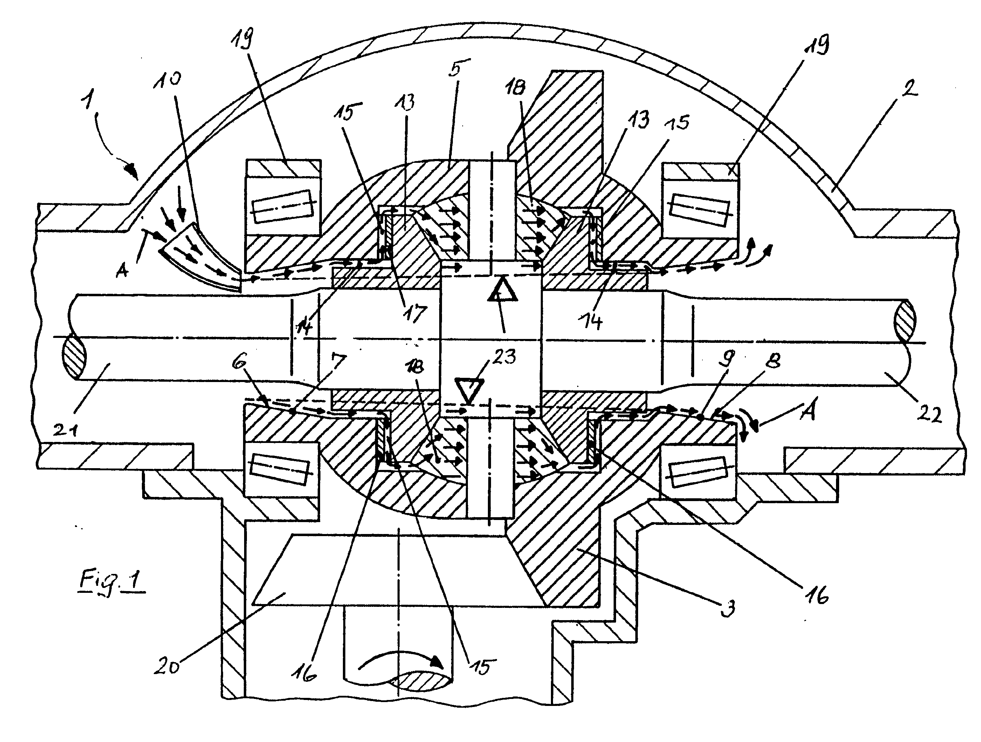

Gemäß Fig. 1 ist eine Schmiervorrichtung (1) für ein Ausgleichsgetriebe von Kraftfahrzeugen vorgesehen, wobei das Ausgleichsgetriebe eingangsseitig ein horizontal angeordnetes Antriebskegelrad (20) und ausgangsseitig eine Antriebshalbwelle (21) und eine Antriebshalbwelle (22) besitzt.

Im Achsgehäuse (2) ist mit Hilfe zweier Kegelrollenlager (19) ein geschlossenes Ausgleichsgehäuse (5) gelagert, in dem sich Achskegelräder (13) und Ausgleichskegelräder (18) befinden. Die Antriebshalbwelle (21) und die Antriebshalbwelle (22) sind jeweils drehfest mit einem großen Achskegelrad (13) verbunden. Im Ausgleichsgehäuse (5) ist ein Tellerrad (3) befestigt, welches mit dem Antriebskegelrad (20) kämmt.

Die Schmiervorrichtung (1) der Fig. 1 umfaßt erfindungsgemäß Einzelausbildungen vor dem eigentlichen Ausgleichsgehäuse (5), im geschlossenen Ausgleichsgehäuse sowie im Bereich der Achskegelräder (13) und der Ausgleichskegelräder(18), die letztlich eine Zwangsdurchströmung von Schmieröl durch das Ausgleichsgehäuse (5) im Betrieb des Ausgleichsgetriebes bewirken, die in Fig. 1 durch eine Vielzahl von Pfeilen (A) dargestellt ist.

Insbesondere ist ein ringförmiger, radial.innerer, axialer erster Endbereich (6) des Ausgleichsgehäuses (5) vorgesehen, der sich konisch erweitert und als eingangsseitiger Schmieröl-Förderkegel (7) im Betrieb ausgebildet ist. Ferner ist auf der anderen Axialseite im Endbereich (8) des Ausgleichsgehäuses (5) bzw. des Tellerrades (3), welches Teil des eigentlichen Ausgleichsgehäuses (5) sein kann,ein zweiter ausgangsseitiger Schmieröl-Förderkegel (9) vorgesehen, der sich in Richtung Ausgang konisch erweitert. Hierbei befindet sich der ausgangsseitige zweite Schmieröl-Förderkegel (9) auf einem, vorzugsweise um 1 bis 20%, größeren Durchmesserniveau als der eingangsseitige erste Schmieröl-Förderkegel (7).

Erfindungsgemäß sind die Schmieröl-Förderkegel (7, 9) auf einem mit Bezug auf sämtliche vollständigen Schmierbereiche (13, 14, 15, 16, 17, 18) des Ausgleichsgetriebes radial inneren Rotationsniveau (23) angeordnet. Dadurch werden sämtliche Schmierbereiche (13, 14, 15, 16, 17, 18) ständig mit frischem Schmieröl versorgt.

Im eintrittsseitigen Endbereich (6) wird gesammeltes Spritzöl zur Verfügung gestellt. Dieses Öl wird infolge Zentrifugalkraft auf den konischen Mantel des ersten Schmieröl-Förderkegels (7) gepreßt und erfährt dadurch eine in den Innenraum des Ausgleichsgehäuses gerichtete axiale Kraftwirkung. Der dabei entstehende Druckaufbau dient der Überwindung der Durchströmungswiderstände und bewirkt einen kontinuierlichen Schmierölaustausch im Ausgleichsgetriebe während des Betriebes. In Fig. 1 ist zusätzlich eingangsseitig in unmittelbarer Nachbarschaft zum ersten Schmieröl-Förderkegel (7) ein achsgehäusefester Öleinflußtrichter (10) im Achsgehäuse (2) angeordnet, der beispielsweise ein breitgequetschtes Füllrohr sein kann.

Beide Achskegelräder (13) bilden mit dem Ausgleichsgehäuse (5) axiale (14) und radiale (15) Öldurchflußnuten. Die radialen Öldurchflußnuten (15) werden durch Axialscheiben (16) gebildet, die an ihren beiden Stirnseiten Radialnuten aufweisen. Die Axialscheiben (16) befinden sich zwischen jeweils einem Achskegelrad (13) und dem Ausgleichsgehäuse (5) und bilden für jedes zugehörige Achskegelrad (13) den entsprechenden Axialanschlag am Gehäuse (5). Die auf beiden Scheibenseiten ausgebildeten Radialnuten (15) sind auf jeder Axialscheibe (16) umfangsmäßig versetzt, so daß Stege (17) ausgebildet werden.

Ersichtlich besorgt die Schmiervorrichtung (1) des veranschaulichten Ausgleichsgetriebes bei einer Schmieröldurchströmung (A) einen Ölstand (23) während des Betriebes, der in Fig. 1 gestrichelt dargestellt ist. Der gestrichelt dargestellte Ölstand ist seinerseits ein Konus, der sich vom eingangsseitigen Endbereich (6) zum ausgangsseitigen anderen axialen Endbereich (8) radial erweitert. Letztgenannte radiale Erweiterung sorgt letztlich für einen effektiven Schmieröldurchfluß. Bei langsam laufenden hochbelasteten Differentialen kann die Steigung der Ölförderkegel (7, 9) größer ausgebildet sein. Bei schnellaufenden Differentialen genügt eine kleine Steigung, da dann durch die höhere Zentrifugalkraft eine ausreichende axiale Kraftwirkung auf das Öl ausgeübt wird.

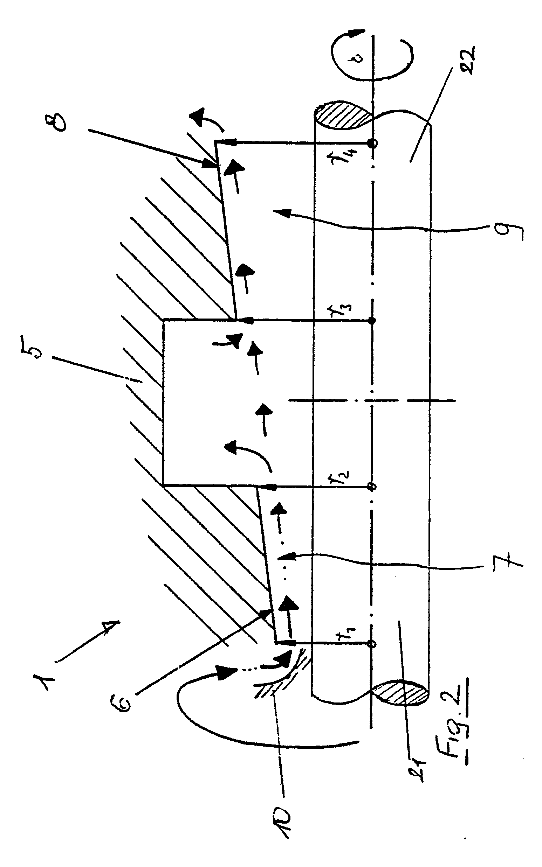

In Fig. 2 ist die Schmiervorrichtung (1) nach Fig. 1 schematisch in einer Prinzipskizze dargestellt. Einander entsprechende Teile sind mit gleichen Bezugszeichen versehen. Der erste eingangsseitige Schmieröl-Förderkegel (7) erweitert sich vom Radius $(r_1)$ auf den Radius $(r_2)$, wobei ein Axialdruck aufgebaut wird. Der zweite ausgangsseitige Schmieröl-Förderkegel (9) besitzt eingangsseitig den Radius $(r_3)$ und ausgangsseitig den größeren Radius $(r_4)$. Im Axialbereich des Ausgleichsgehäuses (5) zwischen $r_2$ und $r_3$ besitzt das durchströmende Schmieröl eine zusätzliche Radialkomponente entsprechend der individuellen Ausbildung der Ausgleichskegelräder (18) dergestalt, daß im Betrieb sämtliche Zahnflanken der Ausgleichskegelräder (18) im Schmieröldurchfluß liegen.

Gemäß der Prinzipskizze nach Fig. 2 ergeben sich folgende Beziehungsmöglichkeiten:

$$r_1 < r_2 \leq r_3 \leq r_4$$

## Ansprüche

1. Schmiervorrichtung (1) für das Ausgleichsgetriebe von Kraftfahrzeugen mit einem in einem Achsgehäuse (2) umlaufenden, geschlossenen, das Tellerrad (3) tragenden und in einen Ölsumpf eintauchenden Ausgleichsgehäuse (5), welches von den mit den Achskegelrädern (13) verbundenen Antriebshalbwellen (21, 22) durchsetzt ist, wobei ein ringförmiger, radial innerer, axialer Endbereich (6) des Ausgleichsgehäuses (5) als (erster) Schmieröl-Förderkegel (7) ausgebildet ist, der in Richtung des ringförmigen, radial inneren anderen axialen Endbereichs (8) des Ausgleichsgehäuses sich erweitert, dadurch gekennzeichnet, daß der Schmieröl-Förderkegel (7) auf einem mit Bezug auf sämtliche vollständigen Schmierbereiche (13, 14, 15, 16, 17, 18) des Ausgleichsgetriebes radial inneren Rotationsniveau (23) angeordnet ist.

2. Schmiervorrichtung nach Anspruch 1, dadurch gekennzeichnet, daß der andere Endbereich (8) des Ausgleichsgehäuses (5) als zweiter Schmieröl-Förderkegel (9) ausgebildet ist, der sich austrittsöffnungsseitig konisch erweitert; wobei der zweite Schmieröl-Förderkegel (9) auf einem mit Bezug auf sämtliche vollständigen Schmierbereiche (13, 14, 15, 16, 17, 18) des Ausgleichsgetriebes radial inneren Rotationsniveau (23) angeordnet ist.

3. Schmiervorrichtung nach Anspruch 2, dadurch gekennzeichnet, daß sich der zweite Schmieröl-Förderkegel (9) bezüglich des ersten Schmieröl-Förderkegels (7) auf einem, vorzugsweise 1 bis 20% größeren Durchmesserniveau befindet.

4. Schmiervorrichtung nach einem der Ansprüche 1 bis 3, dadurch gekennzeichnet, daß der andere Endbereich (8) des Ausgleichsgehäuses (5) integrierter Bestandteil des Tellerrades (3) ist.

5. Schmiervorrichtung nach einem der Ansprüche 1 bis 4, dadurch gekennzeichnet, daß in unmittelbarer Nachbarschaft vor dem ersten Schmieröl-Förderkegel (7) ein achsgehäusefester Öleinflußtrichter (10) im Achsgehäuse (2) angeordnet ist, welcher an vertikal tiefer Stelle in den ersten Schmieröl-Förderkegel (7) axial einmündet.

6. Schmiervorrichtung nach einem der Ansprüche 1 bis 5, dadurch gekennzeichnet., daß die den beiden Antriebshalbwellen (21, 22) zugeordneten Achskegelräder (13) in an sich bekannter Weise mit dem Ausgleichsgehäuse (5) axiale Öldurchflußnuten (14) bilden.

7. Schmiervorrichtung nach einem der Ansprüche 1 bis 6, dadurch gekennzeichnet, daß zwischen den Achskegelrädern (13) und dem Ausgleichsgehäuse (5) in an sich bekannter Weise radiale Öldurchflußnuten (15) vorgesehen sind.

8. Schmiervorrichtung nach Anspruch 7, dadurch gekennzeichnet, daß die radialen Öldurchflußnuten (15) in an sich bekannter Weise durch eine zwischen Ausgleichsgehäuse (5) und Achskegelrad (13) angeordnete Axialscheibe (16) gebildet sind, die an ihren Stirnseiten, vorzugsweise auf beiden Scheibenseiten, Radialnuten besitzt.

## Claims

1. A device (1) for lubricating the differential gears of motor vehicles with a closed differential housing (5) rotating in an axle box (2) and carrying the axle-drive bevel wheel (3) and immersed in an oil sump, drive half-shafts (21, 22) connected to the bevel side gears (13) extending through the differential housing, an annular radially inner axial end region (6) of the differential housing (5) being constructed as a (first) lubricating-oil conveying cone (7) which widens in the direction of the annular, radially inner other axial end region (8) of the differential housing, characterised in that the lubricating-oil conveying cone (7) is disposed at a radially inner rotation level (23) with respect to all the complete lubrication regions (13, 14, 15, 16, 17, 18) of the differential gear.

2. A lubrication device according to claim 1, characterised in that the other end region (8) of the differential housing (5) is constructed as a second lubrication-oil conveying cone (9) and widens conically on the outlet opening side, the second lubricating-oil conveying cone (9) being disposed at a radially inner rotation level (23) with respect to all the complete lubrication regions (13, 14, 15, 16, 17, 18) of the differential gear.

3. A lubricating device according to claim 2, characterised in that the second lubricating-oil conveying cone (9) is disposed at a preferably 1 to 20% greater diameter level relative to the first lubricating-oil conveying cone (7).

4. A lubricating device according to any of claims 1 to 3, characterised in that the other end region (8) of the differential housing (5) is an integral component of the axle-drive bevel wheel (3).

5. A lubricating device according to any of claims 1 to 4, characterised in that an oil inflow funnel (10) is secured to and disposed in the axle box (2) immediately in front of the first lubricating-oil conveying cone (7), and opens axially into a vertically low place in the first lubricating-oil conveying cone (7).

6. A lubricating device according to any of claims 1 to 5, characterised in that the bevel side gears (13) associated with the two drive half-shafts (21, 22) cooperate in known manner with the differential housing (5) to form axial oil flow grooves (14).

7. A lubricating device according to any of claims 1 to 6, characterised in that radial oil flow grooves (15) are provided in known manner between the bevel side gears (13) and the differential housing (5).

8. A lubricating device according to claim 7, characterised in that the radial oil flow grooves (15) are formed in known manner by an axial disc (16) disposed between the differential housing (5) and the bevel side gear (13), the disc having radial grooves in its end faces, preferably on both sides of the disc.

## Revendications

1. Dispositif de lubrification (1) pour la transmission différentielle de véhicules automobiles comprenant une cage du différentiel (5) tournant dans un carter d'essieu (2), fermée, portant la couronne du différentiel (3), plongeant dans un carter d'huile et qui est traversée par les demi-arbres (21, 22) de transmission reliés aux pignons coniques d'essieux (13), une zone d'extrémité (6) axiale, annulaire, radialement intérieure de la cage du différentielle (5) étant réalisée comme (premier) cône de transport d'huile de lubrification (7), qui va en s'évasant en direction de l'autre extrémité (8) axiale, annulaire, radialement intérieure de la cage du différentiel, caractérisé en ce que le cône de transport d'huile de lubrification (7) est placé à un niveau de rotation (23) radialement intérieur par rapport à toutes les zones à lubrifier complètement (13, 14, 15, 16, 17, 18) de la transmission différentielle.

2. Dispositif de lubrification selon la revendication 1, caractérisé en ce que l'autre zone d'extrémité (8) de la cage du différentiel (5) est réalisée comme deuxième cône de transport de l'huile de lubrification (9), qui s'élargit du côté de l'ouverture de sortie, le deuxième cône de transport d'huile de lubrification (9) étant placé à un niveau de rotation radialement intérieur (23) en rapport avec toutes les zones à lubrifier complètement (13, 14, 15, 16, 17, 18) de la transmission différentielle.

3. Dispositif de lubrification selon la revendication 2, caractérisé en ce que le deuxième cône de transport de l'huile de lubrification (9) se trouve par rapport au premier cône de transport de l'huile de lubrification (7) à un niveau de diamètre, de préférence 1 à 20% plus grand.

4. Dispositif de lubrification selon l'une des revendications 1 à 3, caractérisé en ce que l'autre zone d'extrémité (8) de la cage du différentiel (5) est une partie intégrante de la couronne du différentiel (3).

5. Dispositif de lubrification selon l'une des revendications 1 à 4, caractérisé en ce qu'au voisinage direct du premier cône de transport d'huile de lubrification (7) est mis en place en entonnoir d'alimentation d'huile (10) dans le carter d'essieu (2), qui débouche axialement en position verticalement basse dans le premier cône de transport d'huile de lubrification (7).

6. Dispositif de lubrification selon l'une des revendications 1 à 5, caractérisé en ce que les pignons coniques d'essieu (13) associés aux deux demi-arbres de transmission (21, 22) forment de façon connue en soi avec la cage du différentiel (5) des rainures axiales (14) d'écoulement d'huile.

7. Dispositif de lubrification selon l'une des revendications 1 à 6, caractérisé en ce qu'entre les pignons coniques d'essieu (13) et la cage du différentiel (5) de manière en soi connue sont prévues des rainures radiales (15) d'écoulement d'huile.

8. Dispositif de lubrification selon la revendication 7, caractérisé en ce que les rainures radiales (15) d'écoulement d'huile sont réalisées de façon connue en soi par un disque axial (16) placé entre cage du différentiel (5) et pignon conique d'essieu (13), disque qui possède sur ses faces frontales, de préférence des deux côtés du disque des rainures radiales.

Fig. 1

EP 0 280 093 B1

Fig. 2